# NEW EUROPEAN PATENT SPECIFICATION

(11) **EP 1 787 017 B2**
(45) Date of publication and mention of the opposition decision: **01.07.2020**
(45) Mention of the grant of the patent: 09.05.2012
(21) Application number: 05773234.9
(22) Date of filing: 19.07.2005
(51) Int. Cl.: F01N 3/28, F01N 11/00, F01N 3/08, F01N 13/00, F01N 13/14, F01N 13/18

(54) **CATALYTIC CONVERTER AND ASSOCIATED METHOD OF ASSEMBLY**
KALALYTISCHER WANDLER UND ENTSPRECHENDES VERFAHREN ZU DESSEN ZUSAMMENBAU
CONVERTISSEUR CATALYTIQUE ET PROCEDE ET ENSEMBLE ASSOCIES

(30) Priority: 02.08.2004 US 909822
(43) Date of publication of application: 23.05.2007
(73) Proprietor: Faurecia Emissions Control Technologies, USA, LLC, Columbus, Indiana 47201 (US)
(72) Inventor: KRONER, Peter, 66482 Zweibrücken (DE); BOWMAN, James, R., Indianapolis, IN 46259 (US); BARNARD, Kevin, Franklin, IN 46131 (US)
(74) Representative: Prinz & Partner mbB
(86) International application number: PCT/US2005/025411
(87) International publication number: WO 2006/020211

(56) References cited:
- EP-A1- 0 387 422
- EP-A1- 0 387 422
- DE-A1- 3 626 728
- DE-A1- 3 626 728
- JP-A- 2000 073 755
- JP-A- 2000 073 755
- JP-A- 2000 073 755
- US-A- 4 413 392
- US-A- 5 119 551
- US-A- 5 329 698
- US-A1- 2004 197 242
- US-B1- 6 381 843

## Description

### FIELD OF THE DISCLOSURE

The present disclosure relates to a method of assembling catalytic converters.

### BACKGROUND OF THE DISCLOSURE

Catalytic converters are used to treat emissions present in exhaust gas discharged from an engine or other producer of exhaust gas. Such emissions may include, for example, carbon monoxide (CO), unburned hydrocarbons (HC), and nitrogen oxides (NOx). The catalytic converter may be used to convert CO to carbon dioxide (CO₂), HC to water (H₂O), and NOₓ) to nitrogen before discharge of the exhaust gas to the atmosphere.

EP 0 387 422 shows a device that is primarily concerned with how to secure the protective ring of a catalytic converter.

DE 36 26 728 teaches a device for catalytic cleaning of exhaust gases, among other things, describes a rigid protective ring whose end faces are in contact with the two adjoining exhaust gas treating bodies.

### SUMMARY OF THE DISCLOSURE

According to an aspect of a method of assembling the catalytic converter as defined in claim 1, a diameter of the first side portion is reduced to secure the first catalyzed substrate in the first side portion and a diameter of the second side portion is reduced to secure the second catalyzed substrate in the second side portion. Such diameter reduction of one or both of the first and second side portions occurs after insertion of the heat shield into the intermediate portion.

### BRIEF DESCRIPTION OF THE DRAWINGS

FIG. 1 is a longitudinal sectional view of a catalytic converter showing a first heat shield and an oxygen sensor secured to a tubular intermediate portion of an outer tube and first and second catalyzed substrates secured to reduced-diameter tubular side portions of the outer tube;
FIG. 2 is a transverse sectional view taken along lines 2-2 of FIG. 1 showing standoffs of an inner tube of the first heat shield secured to the intermediate portion and a insulation layer of the first heat shield located between the inner tube and the intermediate portion;
FIG. 3 is an enlarged view of region A of FIG. 1 showing the insulation layer located between the inner tube and the intermediate portion;
FIG. 4 is a view similar to FIG. 3 showing an air gap between the inner tube and the intermediate portion;
FIG. 5 is a longitudinal sectional view similar to FIG. 1 showing an inner tube of a second heat shield located in the intermediate portion and secured to the outer tube upon reduction of the diameter of the first and second side portions;
FIG. 6 is a transverse sectional view taken along lines 6-6 of FIG. 5; and
FIG. 7 is an enlarged view of region B of FIG. 5.

### DETAILED DESCRIPTION OF THE DRAWINGS

While the concepts of the present disclosure are susceptible to various modifications and alternative forms, specific exemplary embodiments thereof have been shown by way of example in the drawings and will herein be described in detail. It should be understood, however, that there is no intent to limit the disclosure to the particular forms disclosed, but on the contrary, the intention is to cover all modifications, equivalents, and alternatives following within the scope of the invention as defined by the appended claims.

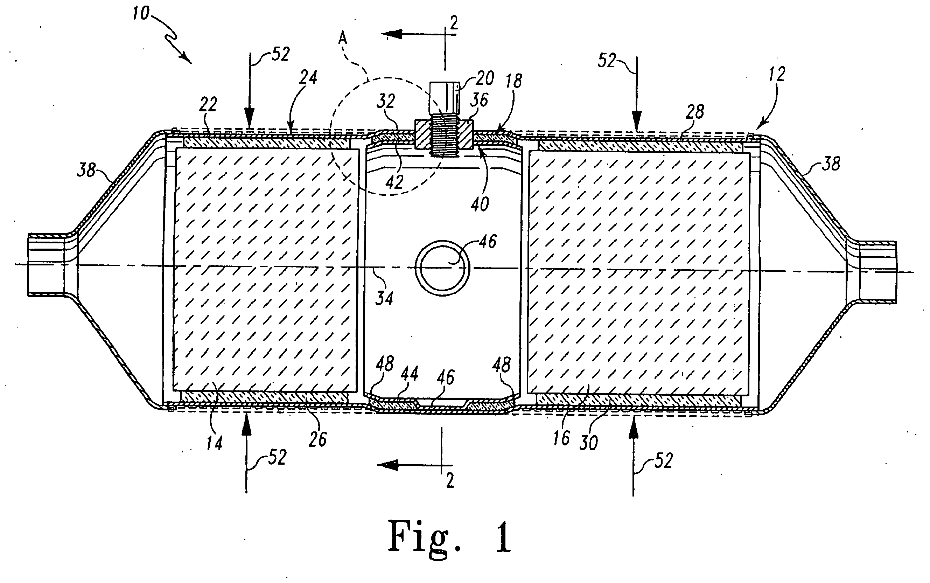

Referring to FIG. 1, a catalytic converter 10 is configured for treating emissions present in exhaust gas discharged from an engine (not shown) or other exhaust gas producer. Converter 10 is used, for example, to convert CO to CO₂, HC to H₂O, and NOₓ to nitrogen.

Converter 10 comprises a housing 12, first and second catalyzed substrates 14, 16, a tubular heat shield 18, and an oxygen sensor 20. Catalyzed substrates 14, 16 are configured to treat the emissions in the exhaust gas. Each catalyzed substrate 14, 16 comprises a substrate that is made of, for example, a ceramic material such as cordierite and is coated with a catalyst such as platinum, palladium, and/or rhodium. Substrate 14 is secured in a tubular first side portion 22 of an outer tube 24 of housing 12 by use of, for example, a first support mat 26 positioned between substrate 14 and first side portion 22 and made of intumescent or fiberglass material. Substrate 16 is secured in a tubular second side portion 28 of outer tube 24 by use of, for example, a second support mat 30 positioned between substrate 16 and second side portion 28 and made of intumescent or fiberglass material. Heat shield 18 is positioned in a tubular intermediate portion 32 of outer tube 24 around a longitudinal axis 34 of outer tube 24 to inhibit transfer of heat from exhaust gas present in intermediate portion 32 to intermediate portion 32. Oxygen sensor 20 is secured to intermediate portion 32 by use of, for example, a sensor mount 36 welded to intermediate portion 32 to sense the oxygen content of exhaust gas present between substrates 14, 16.

Each of side portions 22, 28 has a diameter smaller than a diameter of intermediate portion 32. The diameter of each of side portions 22, 28 is reduced during assembly of converter 10 to secure substrates 14, 16 in side portions 22, 28.

End caps 38 are secured to side portions 22, 28. Together, outer tube 34 and end caps 38 provide housing 12. Illustratively, end caps 38 are welded to outer tube 24. It is within the scope of this disclosure for one or both of end caps 38 to be formed as a one-piece construction with outer tube 24.

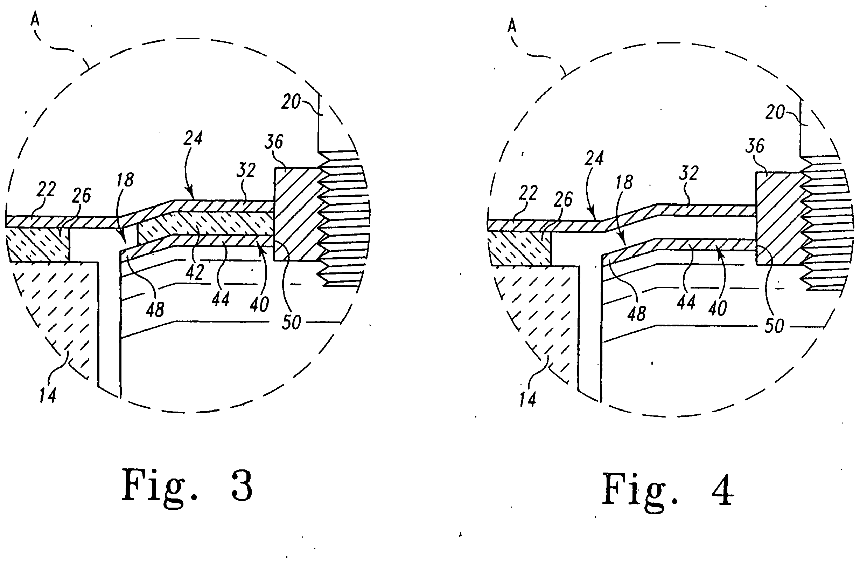

Referring to FIGS. 1-3, heat shield 18 comprises an inner tube 40 and a tubular insulation layer 42 positioned between inner tube 40 and intermediate portion. It is within the scope of this disclosure for layer 42 to be omitted from heat shield 18, as shown, for example, in FIG. 4.

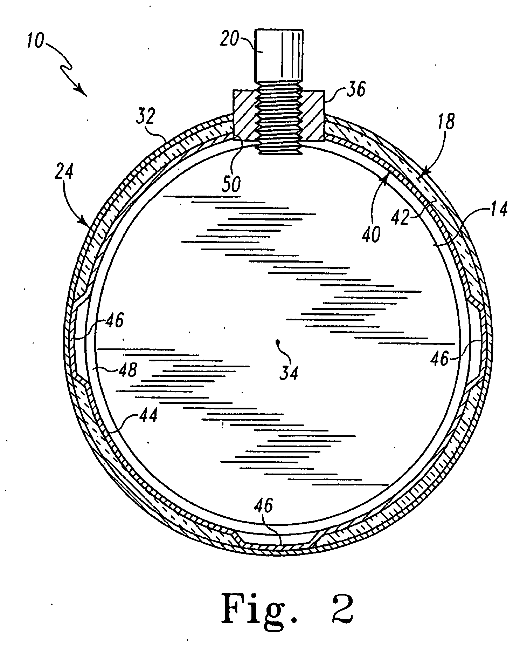

Inner tube 40 comprises a tubular main body 44, a plurality (e.g., three) of standoffs 46, and opposite end portions 48, as shown, for example, in FIGS. 1 and 2. Standoffs 46 extend radially outwardly from main body 44 to intermediate portion 32 and are secured to intermediate portion 32 by, for example, spot-welding. End portions 48 taper radially inwardly from main body 44 to accommodate the difference in diameter between intermediate portion 32 and first and second side portions 22, 28. An aperture 50 defined in main body 44 receives sensor mount 36 to facilitate sensing of oxygen by oxygen sensor 20.

During assembly of converter 10 with heat shield 18, the diameter of side portions 22, 28 is initially the same as the diameter of intermediate portion 32. As such, outer tube 24 is initially cylindrical and has no welds.

Heat shield 18 is inserted through one of side portions 22, 28 into intermediate portion 32 and secured to intermediate portion 32. When heat shield 18 includes insulation layer 42, insulation layer 42 is positioned on inner tube 40 before heat shield 18 is inserted into intermediate portion 32. Standoffs 46 are spot-welded to intermediate portion 32 to secure heat shield 18 in place.

Catalyzed substrates 14, 16 are inserted into side portions 22, 28. First catalyzed substrate 14 is inserted into first side portion 22 and second catalyzed substrate 16 is inserted into second side portion 28.

Each side portion 22, 28 is swaged or otherwise deformed radially inwardly as indicated by arrows 52 from an initial undeformed position shown in phantom in FIG. 1 to a deformed position shown in solid in FIG. 1 to reduce the diameter of each side portion 22, 28. Such diameter reduction of side portions 22, 28 compresses support mats 26, 30 against substrates 14, 16 to hold substrates 14, 16 in place in side portions 22, 28. The diameter of each of side portions 22, 28 may be reduced in this manner after insertion of heat shield 18 into intermediate portion 32. In other cases, the diameter of one of side portions 22, 28 may be reduced before insertion of heat shield 18 into intermediate portion 32 and the diameter of the other side portion 22, 28 may be reduced after insertion of heat shield 18 into intermediate portion 32.

Sensor mount 36 may be secured to intermediate portion 32 and oxygen sensor 20 may be secured to mount 36 before or after reduction of the diameter of side portions 22, 28.

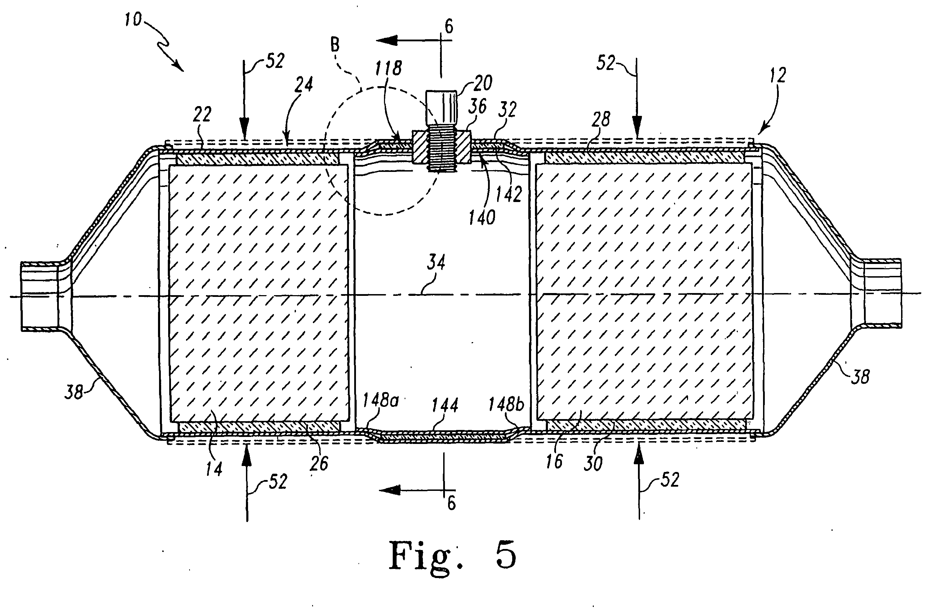

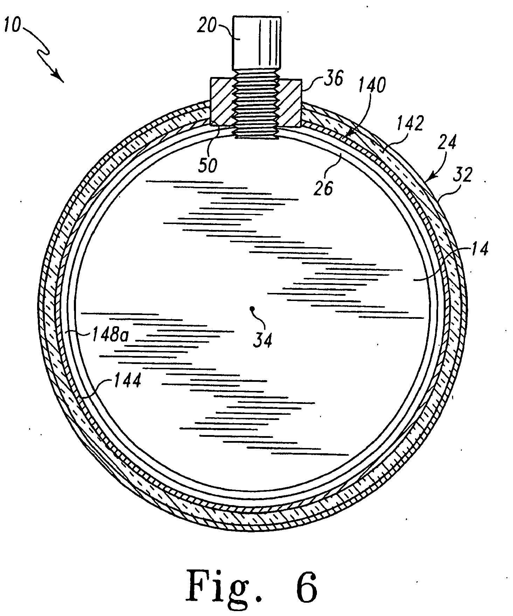

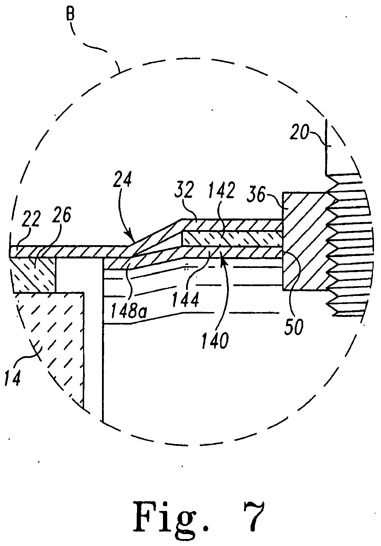

Referring to FIGS. 5-7, converter 10 comprises a heat shield 118 in place of heat shield 18. Heat shield 118 is secured to outer tube 24 in a manner different from the way heat shield 18 is secured to outer tube 24. In particular, heat shield 118 is secured to outer tube 24 as a result of reduction of the diameter of side portions 22, 28.

Heat shield 118 comprises an inner tube 140 and a tubular insulation layer 142 positioned between inner tube 140 and intermediate portion 32. Inner tube 140 comprises a main body 144 and opposite first and second end portions 148a, 148b. Side portions 22, 28 engage opposite end portions 148a, 148b and deform them radially inwardly to establish a mechanical lock between first side portion 22 and first end portion 148a and a mechanical lock between second side portion 28 and second end portion 148b as a result of reducing the diameter of side portions 22, 28. As such, inner tube 140 is secured to outer tube 24 without any welds.

It is to be understood that, as used herein, terms such as "tube," "tubular," "diameter," "cylindrical," and the like implicate a variety of cross-sectional shapes. Such cross-sectional shapes include, for example, a circular cross-sectional shape, an oval cross-sectional shape, a rectangular cross-sectional shape, and other closed curve cross-sectional shapes.

While the concepts of the present disclosure have been illustrated and described in detail in the drawings and foregoing description, such an illustration and description is to be considered as exemplary and not restrictive in character, it being understood that only the illustrative embodiments have been shown and described and that all changes and modifications that come within the disclosure are desired to be protected.

There are a plurality of advantages of the concepts of the present disclosure arising from the various features of the systems described herein. It will be noted that alternative embodiments of each of the systems of the present disclosure may not include all of the features described yet still benefit from at least some of the advantages of such features. Those of ordinary skill in the art may readily devise their own implementations of a system that incorporate one or more of the features of the present disclosure and fall within the scope of the invention as defined by the appended claims.

## Claims

1. A method of assembling a catalytic converter (10) comprising first and second catalyzed substrates (14, 16), a tubular heat shield (18), and an outer tube (24) comprising tubular first and second side portions (22, 28) and a tubular intermediate portion (32) located between the first and second side portions (22, 28), the method comprising the steps of:
inserting the heat shield (18) into the intermediate portion (32), the first catalyzed substrate (14) into the first side portion (22), and the second catalyzed substrate (16) into the second side portion (28),
after inserting the first catalyzed substrate (14) into the first side portion(22), reducing a diameter of the first side portion (22) relative to a diameter of the intermediate portion (32) so as to secure the first catalyzed substrate (14) in the first side portion (22), and,
after inserting the heat shield (18) into the intermediate portion (32) and the second catalyzed substrate (16) into the second side portion (28), reducing a diameter of the second side portion (28) relative to the diameter of the intermediate portion (32) so as to secure the second catalyzed substrate (16) in the second side portion (28).

2. The method of claim 1, comprising securing an oxygen sensor (20) to the intermediate portion (32).

3. The method of claim 1, comprising securing the heat shield (18) to the intermediate portion (32) before at least one of the reducing steps.

4. The method of claim 3, wherein the heat shield (18) comprises an inner tube (40), the inserting step comprises inserting the inner tube (40) into the intermediate portion (32), and the securing step comprises securing the inner tube (40) to the intermediate portion (32) before at least one of the reducing steps, preferably wherein the inner tube (40) comprises a standoff (46), and the securing step comprises welding the standoff (46) to the intermediate portion (32) before at least one of the reducing steps.

5. The method of claim 1, comprising securing the heat shield (18) to the first and second side portions (22, 28) as a result of the reducing steps, preferably wherein the heat shield (18) comprises an inner tube (40) comprising opposite first and second end portions (48), the inserting step comprises inserting the inner tube (40) into the intermediate portion (32), and the securing step comprises deforming the first and second end portions (48) inwardly so as to establish a mechanical lock between the first end portion (148a) and the first side portion (22) and between the second end portion (148b) and the second side portion (28) as a result of the reducing steps.

6. The method of claim 1, wherein the heat shield (18) comprises an inner tube (40), and the inserting step comprises inserting the inner tube (40) into the intermediate portion (32) before at least one of the reducing steps, preferably wherein the inserting step comprises establishing an air gap between the intermediate portion (32) and the inner tube (40) inserted into the intermediate portion (32), or wherein the heat shield (18) comprises a tubular insulation layer (42) surrounding the inner tube (40), and the inserting step comprises inserting the inner tube (40) and the surrounding tubular insulation layer (42) together into the intermediate portion (32) before at least one of the reducing steps.

7. The method of claim 1, wherein the step of reducing the diameter of the first side portion (22) comprises reducing the diameter of the first side portion (22) to be less than the diameter of the intermediate portion (32), and the step of reducing the diameter of the second side portion (28) comprises reducing the diameter of the second side portion (28) to be less than the diameter of the intermediate portion (32), or wherein the step of reducing the diameter of the first side portion (22) comprises swaging the first side portion (22) after inserting the heat shield (18) into the intermediate portion (32) and the first catalyzed substrate (14) into the first side portion (22), and the step of reducing the diameter of the second side portion (28) comprises swaging the second side portion (28) after inserting the heat shield (18) into the intermediate portion (32) and the second catalyzed substrate (16) into the second side portion (28).

8. A method as defined in any preceding claim including the step of initially providing the outer tube (24) with diameter of the first and second side portions (22, 28) being the same as a diameter of the intermediate portion (32).

9. A method as defined in any preceding claim in which after a diameter of the first side portion (22) has been reduced and after a diameter of the second side portion (28) has been reduced the intermediate portion (32) is undeformed.

## Patentansprüche

1. Verfahren zum Zusammenfügen eines Katalysators (10) mit einem ersten und einem zweiten katalysierten Substrat (14, 16), einem rohrförmigen Hitzeschild (18) und einem Außenrohr (24), das einen ersten und einen zweiten rohrförmigen Seitenabschnitt (22, 28) und einen rohrförmigen Zwischenabschnitt (32) aufweist, welcher zwischen dem ersten und dem zweiten Seitenabschnitt (22, 28) angeordnet ist, wobei das Verfahren die Schritte umfasst, bei denen:
der Hitzeschild (18) in den Zwischenabschnitt (32), das erste katalysierte Substrat (14) in den ersten Seitenabschnitt (22) und das zweite katalysierte Substrat (16) in den zweiten Seitenabschnitt (28) eingesetzt werden,
nach dem Einsetzen des ersten katalysierten Substrats (14) in den ersten Seitenabschnitt (22) ein Durchmesser des ersten Seitenabschnitts (22) in Bezug auf einen Durchmesser des Zwischenabschnitts (32) reduziert wird, um das erste katalysierte Substrat (14) im ersten Seitenabschnitt (22) zu befestigen, und
nach dem Einsetzen des Hitzeschilds (18) in den Zwischenabschnitt (32) und des zweiten katalysierten Substrats (16) in den zweiten Seitenabschnitt (28) ein Durchmesser des zweiten Seitenabschnitts (28) in Bezug auf den Durchmesser des Zwischenabschnitts (32) reduziert wird, um das zweite katalysierte Substrat (16) im zweiten Seitenabschnitt (28) zu befestigen.

2. Verfahren nach Anspruch 1, das die Befestigung eines Sauerstoffsensors (20) am Zwischenabschnitt (32) umfasst.

3. Verfahren nach Anspruch 1, das die Befestigung des Hitzeschilds (18) am Zwischenabschnitt (32) vor mindestens einem der Reduzierschritte umfasst.

4. Verfahren nach Anspruch 3, bei dem der Hitzeschild (18) ein Innenrohr (40) aufweist, der Einsetzschritt das Einsetzen des Innenrohrs (40) in den Zwischenabschnitt (32) und der Befestigungsschritt das Befestigen des Innenrohrs (40) am Zwischenabschnitt (32) vor mindestens einem der Reduzierschritte umfasst, bei dem vorzugsweise das Innenrohr (40) einen Abstandshalter (46) aufweist und der Befestigungsschritt das Schweißen des Abstandshalters (46) an den Zwischenabschnitt (32) vor mindestens einem der Reduzierschritte umfasst.

5. Verfahren nach Anspruch 1, das das Befestigen des Hitzeschilds (18) am ersten und am zweiten Seitenabschnitt (22, 28) als Ergebnis der Reduzierschritte umfasst, bei dem vorzugsweise der Hitzeschild (18) ein Innenrohr (40) mit einem ersten und einem zweiten Endabschnitt (48), die entgegengesetzt sind, aufweist, der Einsetzschritt das Einsetzen des Innenrohrs (40) in den Zwischenabschnitt (32) und der Befestigungsschritt das Verformen des ersten und des zweiten Endabschnitts (48) nach innen umfasst, so dass eine mechanische Verriegelung zwischen dem ersten Endabschnitt (148a) und dem ersten Seitenabschnitt (22) und zwischen dem zweiten Endabschnitt (148b) und dem zweiten Seitenabschnitt (28) als Ergebnis der Reduzierschritte gebildet wird.

6. Verfahren nach Anspruch 1, bei dem der Hitzeschild (18) ein Innenrohr (40) aufweist und der Einsetzschritt das Einsetzen des Innenrohrs (40) in den Zwischenabschnitt (32) vor mindestens einem der Reduzierschritte umfasst, bei dem vorzugsweise der Einsetzschritt die Bildung eines Luftspalts zwischen dem Zwischenabschnitt (32) und dem in den Zwischenabschnitt (32) eingesetzten Innenrohr (40) umfasst oder bei dem der Hitzeschild (18) eine das Innenrohr (40) umgebende rohrförmige Isolierschicht (42) aufweist und der Einsetzschritt das Einsetzen des Innenrohrs (40) zusammen mit der umgebenden rohrförmigen Isolierschicht (42) in den Zwischenabschnitt (32) vor mindestens einem der Reduzierschritte umfasst.

7. Verfahren nach Anspruch 1, bei dem bei dem Schritt zur Reduzierung des Durchmessers des ersten Seitenabschnitts (22) der Durchmesser des ersten Seitenabschnitts (22) so reduziert wird, dass er kleiner ist als der Durchmesser des Zwischenabschnitts (32), und bei dem bei dem Schritt zur Reduzierung des Durchmessers des zweiten Seitenabschnitts (28) der Durchmesser des zweiten Seitenabschnitts (28) so reduziert wird, dass er kleiner ist als der Durchmesser des Zwischenabschnitts (32), oder bei dem der Schritt zur Reduzierung des Durchmessers des ersten Seitenabschnitts (22) das Verjüngen des ersten Seitenabschnitts (22) nach dem Einsetzen des Hitzeschilds (18) in den Zwischenabschnitt (32) und des ersten katalysierten Substrats (14) in den ersten Seitenabschnitt (22) umfasst und der Schritt zur Reduzierung des Durchmessers des zweiten Seitenabschnitts (28) das Verjüngen des zweiten Seitenabschnitts (28) nach dem Einsetzen des Hitzeschilds (18) in den Zwischenabschnitt (32) und des zweiten katalysierten Substrats (16) in den zweiten Seitenabschnitt (28) umfasst.

8. Verfahren nach einem der vorhergehenden Ansprüche, das den Schritt umfasst, bei dem das Außenrohr (24) zunächst so vorgesehen wird, dass der Durchmesser des ersten und des zweiten Seitenabschnitts (22, 28) einem Durchmesser des Zwischenabschnitts (32) entspricht.

9. Verfahren nach einem der vorhergehenden Ansprüche, bei dem, nachdem ein Durchmesser des ersten Seitenabschnitts (22) reduziert wurde und ein Durchmesser des zweiten Seitenabschnitts (28) reduziert wurde, der Zwischenabschnitt (32) unverformt ist.

## Revendications

1. Procédé d'assemblage d'un catalyseur (10) présentant un premier et deuxième substrat catalysé (14, 16), un écran thermique tubulaire (18) et un tube extérieur (24) comprenant un premier et un deuxième tronçon latéral tubulaire (22, 28) et un tronçon intermédiaire tubulaire (32) agencé entre le premier et le deuxième tronçon latéral (22, 28), le procédé comprenant les étapes suivantes :
insérer l'écran thermique (18) dans le tronçon intermédiaire (32), le premier substrat catalysé (14) dans le premier tronçon latéral (22) et le deuxième substrat catalysé (16) dans le deuxième tronçon latéral (28),
après l'insertion du premier substrat catalysé (14) dans le premier tronçon latéral (22), réduire un diamètre du premier tronçon latéral (22) par rapport à un diamètre du tronçon intermédiaire (32) pour fixer le premier substrat catalysé (14) dans le premier tronçon latéral (22), et
après l'insertion de l'écran thermique (18) dans le tronçon intermédiaire (32) et du deuxième substrat catalysé (16) dans le deuxième tronçon latéral (28), réduire un diamètre du deuxième tronçon latéral (28) par rapport au diamètre du tronçon intermédiaire (32) pour fixer le deuxième substrat catalysé (16) dans le deuxième tronçon latéral (28).

2. Procédé selon la revendication 1, comprenant la fixation d'un capteur d'oxygène (20) au tronçon intermédiaire (32).

3. Procédé selon la revendication 1, comprenant la fixation de l'écran thermique (18) au tronçon intermédiaire (32) avant au moins l'une des étapes de réduction.

4. Procédé selon la revendication 3, dans lequel l'écran thermique (18) comprend un tube intérieur (40), l'étape d'insertion comprend l'insertion du tube intérieur (40) dans le tronçon intermédiaire (32), et l'étape de fixation comprend la fixation du tube intérieur (40) au tronçon intermédiaire (32) avant au moins l'une des étapes de réduction, dans lequel le tube intérieur (40) comprend de préférence une entretoise (46) et l'étape de fixation comprend le soudage de l'entretoise (46) au tronçon intermédiaire (32) avant au moins l'une des étapes de réduction.

5. Procédé selon la revendication 1, comprenant la fixation de l'écran thermique (18) au premier et au deuxième tronçon latéral (22, 28) en résultat des étapes de réduction, dans lequel l'écran thermique (18) comprend de préférence un tube intérieur (40) présentant un premier et un deuxième tronçon d'extrémité opposés (48), l'étape d'insertion comprend l'insertion du tube intérieur (40) dans le tronçon intermédiaire (32), et l'étape de fixation comprend la déformation du premier et du deuxième tronçon d'extrémité (48) vers l'intérieur de manière à réaliser un verrouillage mécanique entre le premier tronçon d'extrémité (148a) et le premier tronçon latéral (22) et entre le deuxième tronçon d'extrémité (148b) et le deuxième tronçon latéral (28) en résultat des étapes de réduction.

6. Procédé selon la revendication 1, dans lequel l'écran thermique (18) comprend un tube intérieur (40) et l'étape d'insertion comprend l'insertion du tube intérieur (40) dans le tronçon intermédiaire (32) avant au moins l'une des étapes de réduction, dans lequel l'étape d'insertion comprend de préférence la réalisation d'un espace d'air entre le tronçon intermédiaire (32) et le tube intérieur (40) inséré dans le tronçon intermédiaire (32), ou dans lequel l'écran thermique (18) comprend une couche isolante tubulaire (42) entourant le tube intérieur (40) et l'étape d'insertion comprend l'insertion du tube intérieur (40) ensemble avec la couche isolante tubulaire (42) qui l'entoure dans le tronçon intermédiaire (32) avant au moins l'une des étapes de réduction.

7. Procédé selon la revendication 1, dans lequel l'étape de réduction du diamètre du premier tronçon latéral (22) comprend la réduction du diamètre du premier tronçon latéral (22) de sorte qu'il soit inférieur au diamètre du tronçon intermédiaire (32), et dans lequel l'étape de réduction du diamètre du deuxième tronçon latéral (28) comprend la réduction du diamètre du deuxième tronçon latéral (28) de sorte qu'il soit inférieur au diamètre du tronçon intermédiaire (32), ou dans lequel l'étape de réduction du diamètre du premier tronçon latéral (22) comprend l'amincissement du premier tronçon latéral (22) après l'insertion de l'écran thermique (18) dans le tronçon intermédiaire (32) et du premier substrat catalysé (14) dans le premier tronçon latéral (22), et l'étape de réduction du diamètre du deuxième tronçon latéral (28) comprend l'amincissement du deuxième tronçon latéral (28) après l'insertion de l'écran thermique (18) dans le tronçon intermédiaire (32) et du deuxième substrat catalysé (16) dans le deuxième tronçon latéral (28).

8. Procédé selon l'une des revendications précédentes, comprenant l'étape dans laquelle le tube extérieur (24) est d'abord fourni de sorte que le diamètre du premier et du deuxième tronçon latéral (22, 28) correspondent à un diamètre du tronçon intermédiaire (32).

9. Procédé selon l'une des revendications précédentes, dans lequel après la réduction d'un diamètre du premier tronçon latéral (22) et après une réduction d'un diamètre du deuxième tronçon latéral (28), le tronçon intermédiaire (32) est non déformé.
